(19) **Europäisches Patentamt / European Patent Office / Office européen des brevets**

(11) **EP 2 063 525 B1**

(12) # EUROPÄISCHE PATENTSCHRIFT

(45) Veröffentlichungstag und Bekanntmachung des Hinweises auf die Patenterteilung:
**18.08.2010 Patentblatt 2010/33**

(51) Int Cl.:
*H02P 7/24* (2006.01)　　*H02P 7/29* (2006.01)
*G05F 1/56* (2006.01)　　*H02J 9/00* (2006.01)
*H02M 3/156* (2006.01)　　*H02M 3/158* (2006.01)

(21) Anmeldenummer: **08019409.5**

(22) Anmeldetag: **06.11.2008**

(54) **Elektronische Regeleinrichtung**

Electronic control device

Dispositif de réglage électronique

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.11.2007 DE 102007054191**

(43) Veröffentlichungstag der Anmeldung:
**27.05.2009 Patentblatt 2009/22**

(73) Patentinhaber: **Sitronic Ges. für elektrotechnische Ausrüstung mbH & Co. KG**
**71116 Gärtringen (DE)**

(72) Erfinder: **Zametzky, Klaus**
**91126 Schwabach (DE)**

(74) Vertreter: **Kohler Schmid Möbus**
**Patentanwälte**
**Ruppmannstraße 27**
**70565 Stuttgart (DE)**

(56) Entgegenhaltungen:
**EP-A- 1 239 430　　WO-A-2007/095898**
**WO-A-2007/112713　　DE-A1-102004 042 731**
**US-A- 4 926 354**

**Beschreibung**

Die Erfindung betrifft eine elektronische Regeleinrichtung zur Regelung einer Spannung an einer Last, insbesondere an einem Gebläsemotor eines Kraftfahrzeugs, in Abhängigkeit von einem Steuersignal.

Bei einer solchen Regeleinrichtung soll die Spannung an der üblicherweise in High-Side befindlichen Last in Abhängigkeit von einem von außen zugeführten Steuersignal geregelt werden. Liegt kein Steuersignal an, so soll die Regeleinrichtung in einem so genannten Ruhezustand verweilen und möglichst wenig Strom aufnehmen.

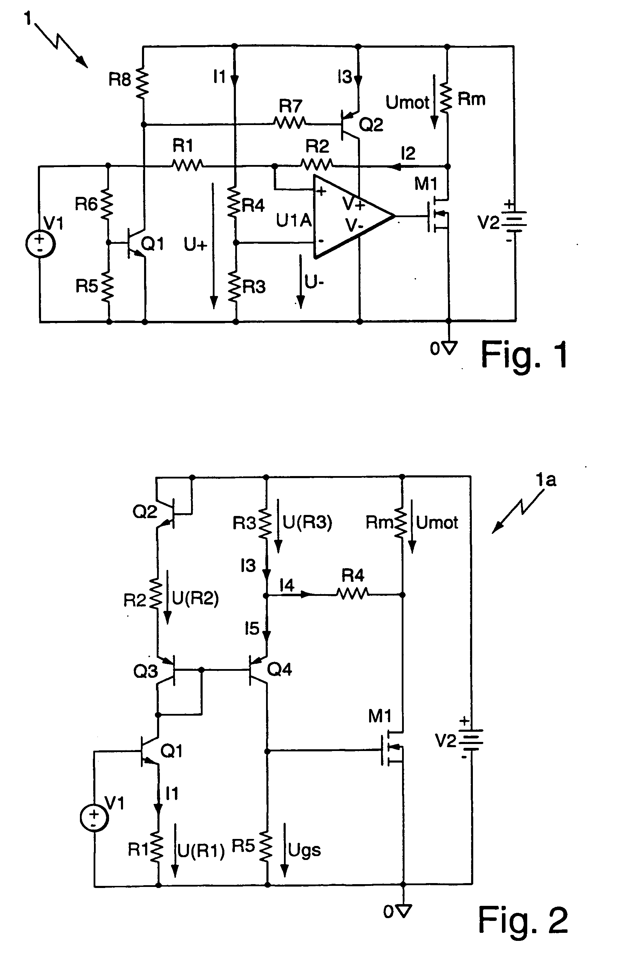

Ein Schaltbild einer solchen Regeleinrichtung **1** als lineare Regelschaltung für einen Gebläsemotor eines Kfz-Gebläses ist in **Fig. 1** gezeigt. Die Regeleinrichtung 1 steht mit einer Fahrzeugbatterie als Spannungsquelle **V2** in Verbindung, welche eine Versorgungsspannung zur Versorgung der Regeleinrichtung 1 liefert. Über der Last **Rm,** welche im vorliegenden Fall durch einen Gebläsemotor gebildet wird, fällt eine zu regelnde Spannung **Umot** ab. Ein Leistungstransistor (MOS-FET) dient als Stelltransistor **M1** für die Regeleinrichtung 1. Am Steuereingang des Stelltransistors M1 ist ein Differenzverstärker **U1A** angeordnet, zwischen dessen Eingängen eine Regelabweichung als Differenz zwischen den Signalen **U+, U-** am invertierenden bzw. nicht-invertierenden Eingang anliegt.

Im Folgenden wird zur Vereinfachung der Beschreibung der Figuren bei den Bezugszeichen nicht zwischen den gezeigten elektronischen Bauteilen und den mit diesen verbundenen Rechengrößen unterschieden. So steht beispielsweise das Bezugszeichen V2 gleichermaßen für eine Spannungsquelle als Bauteil als auch für die durch diese erzeugte Spannung V2.

Bei der Regeleinrichtung 1 liefert eine Spannungsquelle **V1** einen Sollwert in Form einer Steuerspannung V1. Bei V1 = 0 V sind ein erster Transistor **Q1** und ein zweiter Transistor **Q2** der Regeleinrichtung 1 gesperrt, d.h. die Schaltungsanordnung befindet sich insgesamt im Ruhezustand und insbesondere wird auch der Differenzverstärker U1A nicht mehr mit einer Versorgungsspannung versorgt. In diesem Zustand liegt der Strom **I3** durch den zweiten Transistor Q2 daher im vernachlässigbar kleinen Sperrstrombereich. Nur der Strom **I1** durch einen ersten und zweiten Widerstand **R1, R2** sowie der Strom **I2** durch einen dritten und vierten Widerstand **R3, R4** belasten noch die Batterie, d.h. die Spannungsquelle V2, da der Sperrstrom des Stelltransistors M1 ebenfalls vernachlässigbar klein ist. Wird, wie eingangs erwähnt, eine kleine Ruhestromaufnahme gefordert, müssen die vier Widerstände R1 bis R4 hochohmig dimensioniert werden, ein Umstand, der die Schaltungsfunktion kriechstromanfällig macht und ggf. ein kostspieliges Beschichten (Coating) der Leiterplatte erzwingt.

Steigt der Sollwert der Steuerspannung V1 so hoch, dass der erste Transistor Q1 einschaltet, wird der Operationsverstärker U1A mit Spannung versorgt, die Schaltung "erwacht" aus dem Ruhezustand. Der Operationsverstärker U1A stellt seine Ausgangsspannung und damit die Gate-Source-Spannung des Stelltransistors M1 so ein, dass das Signal U+ am nicht-invertierenden Eingang näherungsweise gleich dem Signal U- am invertierenden Eingang wird. Die Anordnung kann durch folgende Gleichungen beschrieben werden, wobei der Einfluss von vier weiteren in der Schaltung angeordneten Widerständen **R5** bis **R8** unberücksichtigt bleiben kann:

$$U_+ = U_- \qquad\qquad (1)$$

$$U_- = V_2 \cdot \frac{R_3}{R_3 + R_4} \qquad\qquad (2)$$

$$U_+ = V_1 + I_2 \cdot R_1 \qquad\qquad (3)$$

$$I_2 = \left( V_2 - U_{mot} - V_1 \right) \cdot \frac{1}{R_1 + R_2} \qquad\qquad (4)$$

Einsetzen von Gleichung (4) in Gleichung (3), die Verwendung von Gleichung (1) und (2) sowie die Substitution

$$\frac{R_1}{R_1 + R_2} = a; \quad \frac{R_3}{R_3 + R_4} = b \quad \text{ergibt:}$$

$$U_+ = V_1 + \left(V_2 - U_{mot} - V_1\right) \cdot \frac{R_1}{R_1 + R_2} \qquad (5)$$

$$V_2 \cdot \frac{R_3}{R_3 + R_4} = V_1 + \left(V_2 - U_{mot} - V_1\right) \cdot \frac{R_1}{R_1 + R_2} \qquad (6)$$

$$b\, V_2 = V_1 + a\, V_2 - a\, U_{mot} - a\, V_1 \qquad (7)$$

Eine wesentliche Forderung an einen Gebläseregler eines Kraftfahrzeugs ist die Ausregelung von Bordspannungsschwankungen, d.h. die Spannung Umot and der Last Rm sollte unabhängig von der Versorgungsspannung V2 sein. V2 verschwindet in Gleichung (7) bzw. Gleichung (6) aber nur für a = b bzw. R1/R2 = R3/R4. Das Verhalten der Regeleinrichtung 1 bei Bordspannungsschwankungen dV2 ist somit von der Paarungstoleranz der Spannungsteiler R1/R2 und R3/R4 abhängig. Es ergibt sich:

$$a\, U_{mot} = V_1 - a\, V_1 \qquad (8)$$

$$U_{mot} = V_1 \left(\frac{1}{a} - 1\right) \qquad (9)$$

$$U_{mot} = V_1 \left(\frac{R_1 + R_2}{R_1} - 1\right) = V_1 \cdot \frac{R_2}{R_1} \qquad (10)$$

Der Zusammenhang Umot = f (V1) wird, ideale Bauteile und ideale Paarungstoleranz R1/R2 = R3/R4 vorausgesetzt, nur durch das Widerstandsverhältnis R1/R2 bestimmt. Die Spannung Umot an der Last Rm ist somit weitgehend unabhängig von der Versorgungsspannung V2, der Operationsverstärker UA1 regelt Bordspannungsschwankungen aus.

Möchte man aus Kostengründen auf einen Verguss der Reglerelektronik verzichten, so ist der Einsatz hochohmiger Widerstände problematisch. Betauung und die damit verbundenen Verunreinigungen auf der Platinenoberfläche, die im Fahrzeug auftreten, führen zu Kriechströmen, welche die Funktion hochohmig dimensionierter Schaltkreise beeinflussen. Die vier Widerstände R1 bis R4 können daher nicht beliebig hochohmig gemacht werden, so dass die durch diese fließenden Ströme I1 bzw. I2 die Batterie im Stand-By-Betrieb belasten. Dies ist insbesondere deshalb problematisch, weil die Zahl der elektronischen Baugruppen, welche von einer Kfz-Batterie gespeist werden, immer mehr zunimmt.

Aus der US 4,926,354 ist ein Leistungssteller mit einer Mehrzahl von MOS-FET-Schaltern bekannt geworden, der geeignet ist, den Stromfluss durch eine Last, z.B. durch einen Gleichstrommotor, zu steuern. Der Leistungssteller weist Ladepumpen-Schaltkreise auf, welche die Leitfähigkeit von zwei der Schalter steuern, um abhängig von Signalen, die eine Laufrichtung des Motors festlegen, Antriebsspannungen an den Motor anzulegen, welche die Laufrichtung des Motors steuern. Die Ladepumpen-Schaltkreise sind ausgelegt, einen vernachlässigbaren Ruhestrom zu erzeugen.

Aus der DE 10 2004 042 731 A1 ist eine Einrichtung für die Unterdrückung von Störsignalen bei einem elektronische Komponenten wie Sensoren und Steuergeräte umfassenden System bekannt geworden. In einer Ausführung weist die Einrichtung zwei Widerstände auf, die einen Spannungsteiler bilden, der den Basisanschluss eines Transistors mit einem durch den Spannungsteiler einstellbaren Ruhestrom versorgt.

Der Erfindung liegt die Aufgabe zugrunde, eine kostengünstige Regeleinrichtung bereitzustellen, welche im Ruhezustand eine ungewöhnlich niedrige Stromaufnahme aufweist.

Diese Aufgabe wird durch eine Regeleinrichtung nach Anspruch 1 gelöst.

Mit der erfindungsgemäßen Regeleinrichtung kann die Stromaufnahme im Ruhezustand gegenüber den aus dem Stand der Technik bekannten Regeleinrichtungen verringert werden, was einen geringen Stromfluss von typischer Weise weniger als 100 nA zur Folge hat, d.h. eine deutliche Reduzierung gegenüber herkömmlichen Schaltungen, bei denen die Ruhestromaufnahme typischer Weise bei ca. 100 $\mu$A oder darüber liegt.

Dies wird dadurch erreicht, dass die Stromversorgung der Widerstände über die bei ausbleibendem Steuersignal gesperrten Transistoren erfolgt. Die Widerstände der Regeleinrichtung können hierbei im Kollektor- bzw. im Emitterkreis der Transistoren angeordnet sein, so dass diese bei ausbleibendem Steuersignal nicht mehr vom Kollektor- bzw. vom Emitterstrom gespeist werden. Es ist aber z.B. bei einem pulsweitenmodulierten (PWM) Steuersignal auch möglich, Widerstände im Bereich des Steuerkanals vorzusehen, da bei ausbleibendem PWM-Signal (entsprechend einem geöffneten Schalter) Widerstände in dem Steuerkanal ebenfalls nicht mit Strom versorgt werden. In jedem Fall weist die erfindungsgemäße Regeleinrichtung im Ruhezustand im Gegensatz zur in Fig. 1 gezeigten Regeleinrichtung keinen geschlossenen, die Batterie belastenden Strompfad auf.

Die Kompensation des Einflusses der Emitter-Basis-Spannung des Transistors auf die Spannung an der Last mit Hilfe der Basis-Emitter-Spannung des weiteren Transistors ermöglicht es, dass die Lastspannung unabhängig von der Emitter-Basis-Spannung des bzw. der Transistoren wird.

Bei einer vorteilhaften Ausführungsform betragen die beiden Widerstände jeweils nicht mehr als 10 k$\Omega$, bevorzugt nicht mehr als 2 k$\Omega$. Durch diese vergleichsweise niederohmige Dimensionierung kann eine geringe Kriechstromanfälligkeit erreicht werden.

Bei einer vorteilhaften Ausführungsform ist die Regeleinrichtung ausgelegt, eine zu dem Steuersignal proportionale Spannung an der Last zu erzeugen, wobei der Proportionalitätsfaktor vom Verhältnis der beiden Widerstände abhängt. Über das Verhältnis der Widerstände kann somit der Proportionalitätsfaktor bei der Regelung eingestellt werden. Es versteht sich, dass bei Steuersignalen, bei denen es sich nicht um Spannungssignale handelt, die Proportionalität zwischen einer von dem Steuersignal abgeleiteten Spannung und der Last-Spannung besteht.

Bei einer besonders vorteilhaften Weiterbildung bildet der weitere Transistor zusammen mit dem Transistor einen basisgekoppelten Differenzverstärker, wobei die Transistoren des Differenzverstärkers bevorzugt einen Doppeltransistor bilden. Unter einem Doppeltransistor wird im Sinne dieser Anmeldung ein Bauelement verstanden, bei dem die beiden Transistoren vom gleichen Leitfähigkeitstyp sowie parametergepaart und thermisch gekoppelt sind. Bei einem Doppeltransistor können die Basis-Emitterspannungen der beiden Transistoren als näherungsweise gleich groß angesehen werden, selbst wenn diese Temperaturschwankungen unterworfen sind, so dass der Einfluss der Basis-Emitter-Spannung des einen Transistors auf die an der Last abfallende Spannung durch die Basis-Emitter-Spannung des weiteren Transistors kompensiert werden kann.

Bei einer vorteilhaften Ausführungsform ist das Steuersignal eine Steuerspannung und es sind zwei zusätzliche Transistoren vorgesehen, wobei dem Steuerkanal des ersten zusätzlichen Transistors die Steuerspannung zugeführt wird, und wobei der zweite zusätzliche Transistor gemeinsam mit dem weiteren Transistor des Differenzverstärkers im Kollektorkreis des ersten zusätzlichen Transistors angeordnet ist. Bei einer solchen Anordnung der zusätzlichen Transistoren lässt sich die Ruhestromabschaltung auf besonders einfache Weise realisieren.

Bei einer bevorzugten Weiterbildung sind im Emitterkreis des ersten zusätzlichen Transistors ein erster Widerstand sowie im Kollektorkreis des ersten zusätzlichen Transistors ein zweiter Widerstand in Serie zum zweiten zusätzlichen Transistor angeordnet, wobei der erste und zweite Widerstand bevorzugt gleich groß sind. Werden die beiden Widerstände in obiger Anordnung gleich groß gewählt, kann der Einfluss der Basis-Emitter-Spannung des ersten zusätzlichen Transistors auf die Spannung durch die Last durch die Basis-Emitter-Spannung des zweiten zusätzlichen Transistors gerade kompensiert werden.

Bei einer vorteilhaften alternativen Ausführungsform ist das Steuersignal ein Steuerstrom und es sind zwei zusätzliche Transistoren vorgesehen, welche einen Stromspiegel zur Übertragung des Steuerstroms auf den weiteren Transistor bilden. Die beiden zusätzlichen Transistoren können in Emitterschaltung betrieben werden, wobei bevorzugt die in den jeweiligen Emitterkreisen angeordneten Widerstände gleich groß gewählt werden. Dies hat zur Folge, dass die Emitterströme gleich groß werden, so dass für den Fall, dass die zusätzlichen Transistoren ebenfalls als Doppeltransistoren ausgeführt sind, die Bedingung identischer Basis-Emitter-Spannungen besonders gut eingehalten wird.

Bei einer besonders bevorzugten Weiterbildung bilden die beiden zusätzlichen Transistoren einen Doppeltransistor. Wie oben dargestellt kann der Einfluss der Basis-Emitter-Spannung des ersten der beiden zusätzlichen Transistoren auf die Lastspannung in diesem Fall mittels des zweiten zusätzlichen Transistors kompensiert werden.

In einer bevorzugten Ausführungsform ist das Steuersignal ein pulsweitenmoduliertes Signal und die Regeleinrichtung weist einen PWM/DC-Umwandler zur Umwandlung des pulsweitenmodulierten Signals in eine Gleichspannung auf. Ein pulsweitenmoduliertes Signal wird häufig als Steuersignal verwendet, da sich in diesem Fall eine Abweichung der Massepotentiale zwischen der Baugruppe, welche das Steuersignal erzeugt, und der Regeleinrichtung nicht nachteilig auf die Regelung auswirkt.

Bei einer besonders vorteilhaften Weiterbildung weist der PWM/DC-Umwandler den weiteren Transistor auf, der bevorzugt mit dem Transistor einen Doppeltransistor bildet, wobei die Emitter-Basis-Spannung des weiteren Transistors den Einfluss der Emitter-Basis-Spannung des Transistors auf die Spannung an der Last bei genau einem Tastverhältnis gerade kompensiert. Das Tastverhältnis des pulsweitenmodulierten, periodischen Signals ist durch das Verhältnis zwischen Einschaltdauer und gesamter Periodendauer des Signals definiert. Es versteht sich, dass die Regeleinrichtung bevorzugt mit genau dem einen Tastverhältnis betrieben wird, bei dem die ideale Kompensation erfolgt. Allerdings wird für gewöhnlich das Tastverhältnis variieren, wobei diese Variation bevorzugt in einem Bereich um das ideale Tastverhältnisses herum erfolgt.

Bei einer weiteren vorteilhaften Weiterbildung sind parallel zur Basis-Emitter-Strecke der weiteren Transistors ein Basis-Emitter-Widerstand sowie parallel zur Kollektor-Basis-Strecke des weiteren Transistors ein Kollektor-Basis-Widerstand angeordnet, wobei das genau eine Tastverhältnis über das Verhältnis der Widerstände einstellbar ist. Durch das Widerstandsverhältnis kann das eine Tastverhältnis, bei dem sich die Kompensation ergibt, je nach Auslegung der Schaltung ggf. über den gesamten für das Tastverhältnis möglichen Bereich zwischen Null und Eins beliebig eingestellt werden. Es versteht sich, dass ggf. durch das Ersetzen der beiden Widerstände durch einen regelbaren Widerstand das ideale Tastverhältnis auch einstellbar gemacht werden kann.

Bei einer vorteilhaften Ausführungsform umfasst die Regeleinrichtung weiterhin einen unterlagerten Schaltungsteil, insbesondere einen Strombegrenzer, der im Kollektorkreis des Transistors angeordnet ist und der von dessen Kollektorstrom gespeist wird. Die Spannungsversorgung des unterlagerten Schaltungsteils erfolgt in diesem Fall über den Transistor, so dass sichergestellt ist, dass dieser im Ruhezustand der Regeleinrichtung ebenfalls keinen Ruhestrom aufnimmt.

Bei einer vorteilhaften Weiterbildung ist der unterlagerte Schaltungsteil parallel zur Gate-Source-Steuerstrecke des als MOS-FET ausgebildeten

Stelltransistors angeordnet. In diesem Fall kann der unterlagerte Schaltungsteil als Strombegrenzer dienen, welcher dafür sorgt, dass die GateSpannung des Stelltransistors einen vorgebbaren Maximalwert nicht überschreitet.

Besonders bevorzugt ist die Regeleinrichtung aus diskreten Bauteilen aufgebaut. Eine solche Regeleinrichtung ist robust und lässt sich daher auch bei hohen Temperaturen von bis zu 150°C betreiben sowie mit verhältnismäßig wenigen Bauteilen realisieren.

Ein weiterer Aspekt der Erfindung ist realisiert in einem Kraftfahrzeuggebläse mit einer Regeleinrichtung wie oben beschrieben, bei dem die Last durch einen Gebläsemotor gebildet ist. Ein solches Kfz-Gebläse nimmt im Ruhezustand nur einen sehr geringen Ruhestrom auf und kann daher dazu beitragen, dass sich die Kfz-Batterie auch bei längeren Standzeiten des Kraftfahrzeugs nicht entlädt.

Ausführungsbeispiele der erfindungsgemäßen Regeleinrichtung sind in den schematischen Zeichnungen dargestellt und werden in der nachfolgenden Beschreibung erläutert. Es zeigt:

Fig. 1        ein Schaltbild einer Regeleinrichtung mit Ruhestromabschal- tung nach dem Stand der Technik,

Fig. 2        ein Schaltbild einer Ausführungsform einer erfindungsgemäßen Regeleinrichtung mit einer Steuerspannung als Steuersignal,

Fign.3a,b     Schaltbilder von Ausführungsformen der erfindungsgemäßen Regeleinrichtung mit einem Steuerstrom als Steuersignal,

Fign. 4a-d    Schaltbilder einer Regeleinrichtung mit einem pulsweiten- modulierten Signal als Steuersignal (in Fign. 4b-d als Ausfüh- rungsformen der erfindungsgemäßen Regeleinrichtung), und

Fig. 5        ein Schaltbild der Ausführungsform von Fig. 2 mit einem Strombegrenzer als zusätzlichem unterlagerten Schaltungsteil.

In **Fig. 2** ist eine Regeleinrichtung **1a** gezeigt, welche ebenso wie die in Fig. 1 gezeigte Regeleinrichtung 1 zur Regelung einer Spannung Umot über einem Gebläsemotor als Last Rm dient und welche in einem (nicht gezeigten) Kraftfahrzeuggebläse integriert ist. Die Kfz-Batterie, die selbst nicht Teil der Regeleinrichtung 1 ist, liefert für diese eine Versorgungsspannung V2. Ein MOS-FET als Stelltransistor M1 dient zur Einstellung des Stroms und damit der Spannung Umot durch die Last Rm. Der Steuerkanal (Gate) des Stelltransistors M1 wird durch einen Transistor **Q4** angesteuert. Über einen dritten und vierten Widerstand R3, R4, die einen Spannungsteiler bilden, wird die Spannung Umot an der Last Rm dem Emitter des Transistors Q4 zugeführt. Der Transistor Q4 ist mit einem weiteren Transistor **Q3,** dessen Basis-Kollektor-Strecke überbrückt ist, basisgekoppelt und bildet mit diesem einen Differenzverstärker. Als Steuersignal dient wie in Fig.1 eine Steuerspannung V1, welche der Basis eines ersten zusätzlichen Transistors **Q1** zugeführt wird. Ein zweiter zusätzlicher Transistor **Q2,** dessen Basis-Kollektor-Strecke ebenfalls überbrückt ist, ist gemeinsam mit dem weiteren Transistor Q3 des Differenzverstärkers im Kollektorkreis des ersten zusätzlichen Transistors Q1 angeordnet.

Weiterhin ist im Emitterkreis des ersten zusätzlichen Transistors Q1 ein erster Widerstand R1 sowie im Kollektorkreis des ersten zusätzlichen Transistors Q1 ein zweiter Widerstand R2 in Serie zum zweiten zusätzlichen Transistor Q2 angeordnet. Ein fünfter Widerstand R5 ist parallel zur Gate-Source-Steuerstrecke des Stelltransistors M1 angeordnet.

Bei verschwindender Steuerspannung V1 = 0 V ist der erste weitere Transistor Q1 gesperrt und die gesamte Anordnung stromlos, d.h. sie befindet sich im Ruhezustand. Auch wenn alle Widerstände R1 bis R5 niederohmig dimensioniert werden, liegt die Stromaufnahme der gesamten Regeleinrichtung 1 im vernachlässigbar kleinen Sperrstrombereich von typischerweise weniger als ca. 100 nA. Steigt die Steuerspannung V1 so hoch, dass der erste Transistor Q1 leitend wird, erwacht die Schaltung aus dem Ruhezustand und kann (unter Vernachlässigung der Basisströme) durch folgende Gleichungen beschrieben werden:

$$I1 = \frac{V1 - U_{BE}(Q1)}{R1} \qquad (11)$$

$$U(R2) = I1 \cdot R2 \qquad (12)$$

$$U(R3) + U_{EB}(Q4) =$$
$$= U_{BE}(Q2) + U(R2) + U_{EB}(Q3) \qquad (13)$$

$$I3 = I4 + I5 \qquad (14)$$

Aus Gleichung (14) ergibt sich:

$$\frac{U(R3)}{R3} = \frac{Umot - U(R3)}{R4} + \frac{Ugs}{R5}$$

$$Umot = \left(\frac{R4}{R3} + 1\right) \cdot U(R3) - \frac{R4}{R5} \cdot Ugs \qquad (15)$$

Verwendet man für die weiteren Transistoren Q1 und Q2 bzw. für die Transistoren Q3 und Q4 des Differenzverstärkers jeweils thermisch gekoppelte Transistoren mit gepaarten Eigenschaften (Doppeltransistoren), so gilt in guter Näherung: $U_{BE}(Q1) = U_{BE}(Q2)$ und $U_{EB}(Q3) = U_{EB}(Q4)$. Es folgt unter Einsetzen von Gleichung (13) in Gleichung (15) sowie unter Verwendung der Gleichungen (11) und (12):

$$Umot = \left(\frac{R4}{R3} + 1\right) \cdot [U_{BE}(Q2) + U(R2)] - \frac{R4}{R5} \cdot Ugs \qquad (16)$$

$$Umot = \left(\frac{R4}{R3} + 1\right) \cdot [U_{BE}(Q2) + I1 \cdot R2] - \frac{R4}{R5} \cdot Ugs \qquad (17)$$

$$Umot = \left(\frac{R4}{R3}+1\right)\cdot\left[U_{BE}(Q2)+\frac{V1-U_{BE}(Q1)}{R1}\cdot R2\right]-\frac{R4}{R5}\cdot Ugs \qquad (18)$$

gemäß den obigen Gleichungen ist Umot stets unabhängig von der Versorgungsspannung V2. Zwar besteht in der Praxis aufgrund des Early-Effektes, der in den Gleichungen (1) bis (4) nicht berücksichtigt wird, dennoch eine sehr geringe Abhängigkeit von der Versorgungsspannung V2, für Gebläsereglerschaltungen spielt diese jedoch eine vernachlässigbare Rolle. Insbesondere ist es im Gegensatz zum Stand der Technik zur Erzeugung einer Spannung Umot über der Last Rm, die von der Versorgungsspannung V2 unabhängig ist, nicht notwendig, dass zwei Widerstandsverhältnisse einen bestimmten Wert annehmen, so dass das obige Ergebnis von Widerstandspaarungstoleranzen unabhängig ist.

Das in Gleichung (18) gefundene Ergebnis lässt sich noch weiter vereinfachen, wenn man die Beträge des ersten und zweiten Widerstands R1, R2 gleich groß wählt (R1 = R2) und die Gleichheit der Basis-Emitter-spannungen der weiteren Transistoren Q1 un d Q2 berücksichtigt:

$$Umot = \left(\frac{R4}{R3}+1\right)\cdot V1-\frac{R4}{R5}\cdot Ugs \qquad (19)$$

Wählt man weiterhin den fünften Widerstand R5 deutlich größer als den vierten Widersand R4 (R5 >> R4), so wird der Zusammenhang zwischen der Spannung Umot über der Last Rm und der Steuerspannung V1 in guter Näherung nur durch das Verhältnis R4/ R3 bestimmt:

$$Umot \approx \left(\frac{R4}{R3}+1\right)\cdot V1 \qquad (20)$$

Durch die in Fig. 2 gezeigte Regeleinrichtung kann somit eine Spannung Umot über der Last Rm erzeugt werden, die proportional zur Steuerspannung V1 ist, wobei der Proportionalitätsfaktor sich durch das Verhältnis des dritten und vierten Widerstands R3, R4 einstellen lässt.

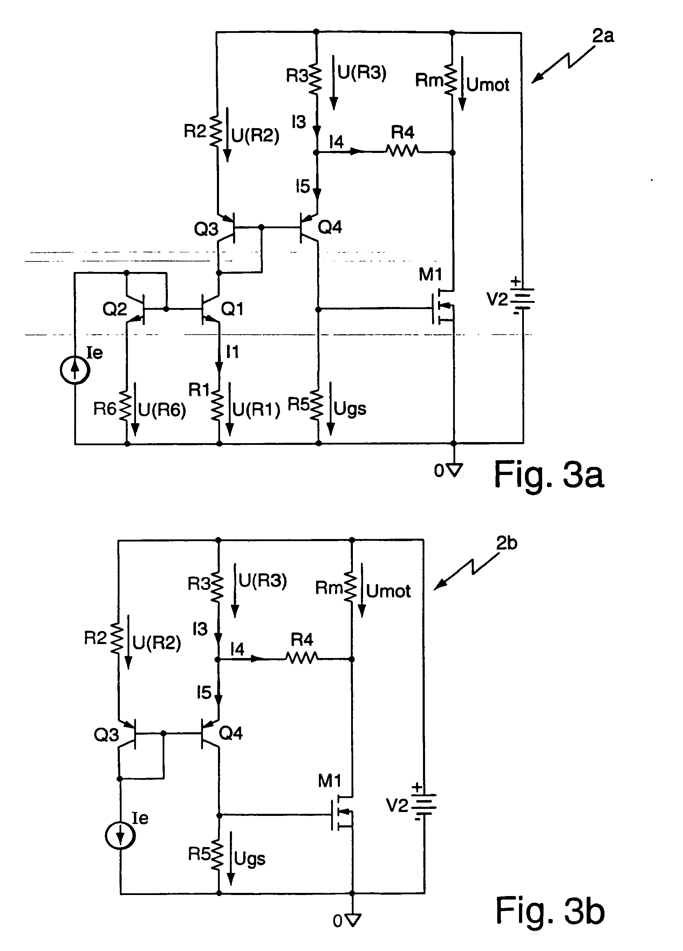

Wird als Steuersignal ein Strom **Ie** gewählt, so ist die Verwendung einer Regeleinrichtung **2a** günstig, wie sie in **Fig. 3a** gezeigt ist. Die Regeleinrichtung von Fig. 3a unterscheidet sich von der Regeleinrichtung 1a von Fig. 2 im Wesentlichen dadurch, dass der zweite zusätzliche Transistor Q2 nicht mehr im Kollektorkreis des ersten zusätzlichen Transistors Q1 angeordnet, sondern mit diesem basisgekoppelt ist. Weiterhin ist ein sechster Widerstand **R6** im Emitterkreis des zweiten zusätzlichen Transistors Q2 angeordnet. Die zwei zusätzlichen Transistoren Q1, Q2 bilden hierbei einen Stromspiegel zur Übertragung des Steuerstroms Ie auf den weiteren Transistor Q3.

Bei einem Steuerstorm Ie = 0 mA ist der erste zusätzliche Transistor Q1 gesperrt und die gesamte Anordnung befindet sich im stromlosen Ruhezustand. Hierbei liegt, wie bei der Regeleinrichtung 1a von Fig. 2, die Stromaufnahme der gesamten Anordnung im vernachlässigbar kleinen Sperrstrombereich, auch wenn alle Widerstände R1 bis R6 niederohmig dimensioniert werden.

Bei einem Steuerstorm Ie > 0 wird der erste zusätzliche Transistor Q1 leitend, die Schaltung "erwacht" aus dem Ruhezustand und kann (unter Vernachlässigung der Basisströme) durch folgende Gleichungen beschrieben werden:

$$I1 = \frac{Ie\cdot R6+U_{BE}(Q2)-U_{BE}(Q1)}{R1} \qquad (21)$$

$$U(R2) = I1 \cdot R2 \qquad (22)$$

$$U(R3) + U_{EB}(Q4) = U(R2) + U_{EB}(Q3) \qquad (23)$$

$$I3 = I4 + I5 \qquad (24)$$

Aufgrund der Ähnlichkeit zwischen den Stromlaufplänen der Regeleinrichtung 1a von Fig. 2 und der Regeleinrichtung 2a von Fig. 3a gilt auch im vorliegenden Fall Gleichung (15):

$$Umot = \left(\frac{R4}{R3} + 1\right) \cdot U(R3) - \frac{R4}{R5} \cdot Ugs \qquad (15)$$

Auch im vorliegenden Fall sei unterstellt, dass für die beiden zusätzlichen Transistoren Q1 und Q2 bzw. die beiden Transistoren Q3 und Q4 des Differenzverstärkers Doppeltransistoren mit gepaarten Eigenschaften verwendet werden, so dass $U_{BE}(Q1) = U_{BE}(Q2)$ bzw. $U_{BE}(Q3) = U_{BE}(Q4)$ gilt und unter Einsetzen von Gleichung (23) in Gleichung (15) sowie unter Verwendung von Gleichung (22) und (21) ergibt sich:

$$Umot = \left(\frac{R4}{R3} + 1\right) \cdot U(R2) - \frac{R4}{R5} \cdot Ugs \qquad (25)$$

$$Umot = \left(\frac{R4}{R3} + 1\right) \cdot I1 \cdot R2 - \frac{R4}{R5} \cdot Ugs \qquad (26)$$

$$Umot = \left(\frac{R4}{R3} + 1\right) \cdot Ie \cdot \frac{R6 \cdot R2}{R1} - \frac{R4}{R5} \cdot Ugs \qquad (27)$$

Die Bedingung $U_{BE}(Q1) = U_{BE}(Q2)$ wird für gepaarte Transistoren besonders genau eingehalten, wenn deren Emitterströme gleich groß sind. Daher wird bevorzugt der Widerstand R1 im Emitterkreis des ersten zusätzlichen Transistors Q1 gleich groß wie der Widerstand R6 im Emitterkreis des zweiten zusätzlichen Transistors Q2 gewählt, so dass sich für die Spannung Umot an der Last Rm ergibt:

$$Umot = \left(\frac{R4}{R3} + 1\right) \cdot Ie \cdot R2 - \frac{R4}{R5} \cdot Ugs \qquad (28)$$

Wählt man wie in Zusammenhang mit Fig. 2 beschrieben den fünften Widerstand R5 deutlich größer als den vierten Widerstand R4 (R5 >> R4), so wird der Zusammenhang zwischen der Last-Spannung Umot und dem Steuerstrom Ie in guter Näherung nur durch den zweiten bis vierten Widerstand R2, R3, R4 bestimmt:

$$Umot \approx \left(\frac{R4}{R3} + 1\right) \cdot Ie \cdot R2 \qquad\qquad (29)$$

Auch in diesem Fall ist somit die Spannung Umot an der Last Rm proportional zum Steuersignal, d.h. dem Steuerstrom Ie. Der Proportionalitätsfaktor kann hierbei durch das Verhältnis zwischen dem dritten und vierten Widerstand R3, R4 eingestellt werden.

In **Fig. 3b** ist eine weitere Regeleinrichtung **2b** für den Steuerstrom Ie als Steuersignal gezeigt. Die Regeleinrichtung 2b unterscheidet sich von der Regeleinrichtung 2a von Fig. 3a dadurch, dass der Steuerstrom entgegengesetzte Polarität aufweist. In diesem Fall können die beiden weiteren Transistoren Q1, Q2 sowie der erste und sechste Widerstand R1, R6 entfallen. Auch in diesem Fall ergibt sich unter der Voraussetzung, dass der fünfte Widerstand R5 deutlich größer als den vierte Widerstand R4 (R5 >> R4) gewählt wird, die in Gleichung (29) angegebene Beziehung für die Spannung Umot an der Last Rm. Wird bei den beiden Regeleinrichtungen 2a, 2b der zweite Widerstand R2 gleich dem dritten Widerstand R3 gewählt, ist der Proportionalitätsfaktor zwischen Spannung Umot und Steuerstrom Ie nur noch von der Summe aus dem dritten und vierten Widerstand R3, R4 abhängig.

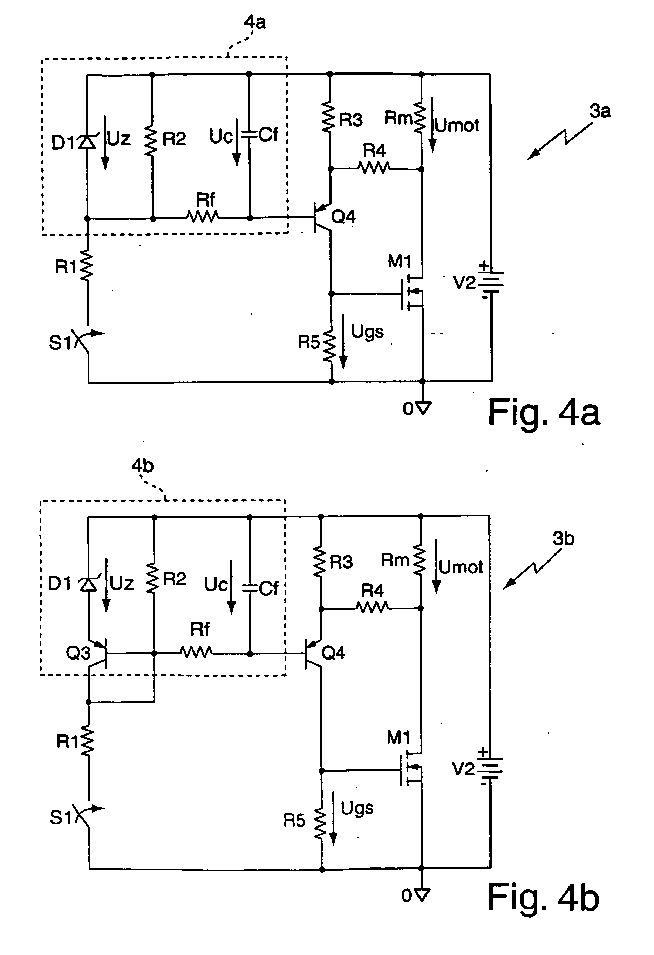

Wird als Steuersignal ein pulsweitenmoduliertes Schaltsignal gewählt, so ist die Verwendung von Regeleinrichtungen **3a** bis **3d** günstig, wie sie im Folgenden anhand der **Fign. 4a-d** beschrieben werden.

Bei der in Fig. 4a gezeigten Regeleinrichtung 3a wird das Schaltsignal S1 durch einen Schalter S1 erzeugt, der periodisch ein- und ausschaltet. Der Schalter S1 kann z.B. durch einen Transistor in Open-Kollektor-Schaltung realisiert werden, welcher keinen Teil der Regeleinrichtung 3a darstellt, sondern im Regelfall über eine Leitung mit der Regeleinrichtung 3a verbunden ist.

Das Steuersignal S1 wird durch das Verhältnis zwischen Ein- und Ausschaltzeitdauer des Schalters S1 gebildet mit der Definition:

$$Steuersignalpegel \equiv Tastverh\ddot{a}ltnis(TV) \ mit \ TV = \frac{t_{on}}{t_{on} + t_{off}} = \frac{t_{on}}{T}$$

Eine Anordnung aus einer Zener-Diode **D1,** einem zweiten Widerstand **R2,** sowie einem Tiefpassfilter, der aus einem Widerstand **Rf** sowie einem Kondensator **Cf** besteht, bildet einen PWM/DC-Umwandler **4a,** welcher das Steuersignal S1 mit Tastverhältnis TV in eine Gleichspannung $U_C$ an dem Kondensator Cf umwandelt. Wählt man den Widerstand Rf des Tiefpassfilters deutlich größer als den zweiten Widerstand R2 (Rf >> R2) und wählt man außerdem das Produkt aus Kapazität Cf und Widerstand Rf deutlich größer als die Periodenlänge T des pulsweitenmodulierten Steuersignals S1 (Cf * Rf >> T), so gilt in guter Näherung:

$$U_C \approx TV \cdot U_z$$

und es ergibt sich für die Spannung Umot an der Last Rm (R5 >> R4) aus Gleichung (15):

$$Umot \approx \left(\frac{R4}{R3} + 1\right) \cdot \left(U_C - U_{EB}(Q4)\right) \qquad\qquad (30)$$

bzw.

$$Umot \approx \left(\frac{R4}{R3}+1\right)\cdot\left(TV\cdot U_Z - U_{EB}(Q4)\right) \qquad (31)$$

Der Einfluss der Emitter-Basis-Spannung $U_{EB}(Q4)$ des Transistors Q4 auf die Last-Spannung Umot kann, wie in **Fig. 4b** anhand einer Regeleinrichtung **3b** gezeigt, durch Verwendung eines weiteren Transistors Q3 in einem PWM/DC-Umwandler **4b** für ein bestimmtes Tastverhältnis eliminiert werden (bei R5 >> R4):

$$Umot \approx \left(\frac{R4}{R3}+1\right)\cdot\left\{TV\cdot\left[U_Z + U_{EB}(Q3)\right]-U_{EB}(Q4)\right\} \qquad (32)$$

Insbesondere wenn für den Transistor Q4 und den weiteren Transistor Q3 ein Doppeltransistor mit gepaarten Parametern sowie mit thermischer Kopplung verwendet wird, gilt $U_{EB}(Q3) = U_{EB}(Q4)$ und damit für TV =1:

$$Umot \approx \left(\frac{R4}{R3}+1\right)\cdot U_z \qquad (33)$$

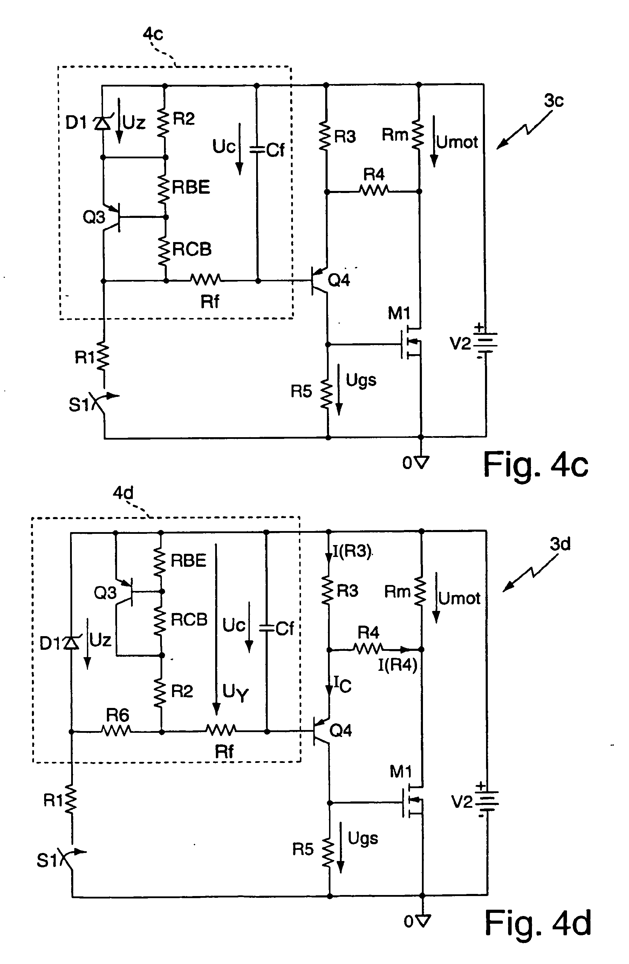

Die in Fig. 4b gezeigte Regeleinrichtung 3b arbeitet daher bei großen Tastverhältnissen TV nahe bei TV = 1 näherungsweise exakt. Soll bei einem beliebigen Tastverhältnis eine exakte Kompensation des Einflusses der Basis-Emitter Spannung $U_{EB}(Q4)$ auf die Last-Spannung Umot erfolgen, so ist es günstig, eine Regeleinrichtung **3c** zu verwenden, wie sie in **Fig. 4c** gezeigt ist und welche einen PWM/DC-Umwandler **4c** aufweist, bei dem parallel zur Basis-Emitter-Strecke der weiteren Transistors Q3 ein Basis-Emitter-Widerstand **RBE** sowie parallel zur Kollektor-Basis-Strecke des weiteren Transistors Q3 ein Kollektor-Basis-Widerstand **RCB** angeordnet ist. Mit einer solchen Schaltungsanordnung ergibt sich für die Last-Spannung Umot (bei R5 >> R4):

$$Umot \approx \left(\frac{R4}{R3}+1\right)\cdot\left\{TV\cdot\left[U_z + U_{EB}(Q3)\cdot\left(\frac{R_{CB}}{R_{BE}}+1\right)\right]-U_{EB}(Q4)\right\} \qquad (34)$$

Bei Verwendung eines Doppeltransistors sind die Emitter-Basis-Spannungen der beiden Transistoren Q3, Q4 gleich groß. Wird in diesem Fall für den Vorfaktor $\frac{R_{CB}}{R_{BE}}+1 = \frac{1}{TV}$ gewählt, so ergibt sich:

$$Umot \approx \left(\frac{R4}{R3}+1\right)\cdot U_z \cdot TV \qquad (35)$$

Bei der Anpassung des Widerstandsverhältnisses RCB / RBE an ein beliebig wählbares Tastverhältnis TV arbeitet die Regeleinrichtung 3c daher exakt, wobei die Regeleinrichtung auch in einem Bereich um dieses Tastverhältnis herum noch gute Eigenschaften mit hoher Genauigkeit ermöglicht. Konkret kann beispielsweise eine Regeleinrichtung gefordert sein, welche in einem Bereich von Tastverhältnissen zwischen TV= 0,3 und 0,7 gute Resultate erzielen soll. In diesem Fall kann $R_{CB} = R_{BE}$ gewählt werden, so dass die Regeleinrichtung 3c bei einem Tastverhältnis TV = 0,5 exakt arbeitet. Die gesamte Regeleinrichtung 3c inklusive PWM/DC-Umwandler 4c besteht nur aus einem Doppeltransistor (Q3, Q4), der Zener-Diode D1, dem Kondensator Cf und einer geringen Anzahl von Widerständen.

Der Grundgedanke der Regeleinrichtungen 3a bis 3c besteht darin, den Einfluss des Transistors Q4 durch den weiteren Transistor Q3, der Teil des PWM/DC-Wandlers 4a bis 4c ist, zu kompensieren. Betrachtet man den weiteren Transistor Q3 (in Anlehnung an eine klassische Differenzverstärkerstufe) als Teil des Spannungsreglers, so ist der PWM / DC-Umwandler in den Spannungsregler eingebettet, es handelt sich somit um einen Spannungsregler mit integralem PWM/DC-Umwandler.

Neben den beispielhaft in Fig. 4a bis 4c gezeigten Schaltungen existieren weitere Möglichkeiten, einen Spannungsregler mit integralem PMW/DC-Umwandler aufzubauen, von denen eine in **Fig. 4d** für eine Regeleinrichtung **3d** gezeigt ist, welche einen PWM/DC-Umwandler **4d** aufweist, bei dem die Zener-Diode D1 parallel zum weiteren Transistor Q3 angeordnet und bei dem ein sechster Widerstand **R6** vorgesehen ist. Die in Fig. 4d gezeigte Regeleinrichtung 3d lässt sich durch folgende Gleichungen beschreiben:

$$I(R3) = I(R4) + I_C(Q4) \qquad (36)$$

$$\frac{U(R3)}{R3} = \frac{U(R4)}{R4} + \frac{Ugs}{R5} \qquad (37)$$

$$\frac{Uc - U_{EB}(Q4)}{R3} = \frac{Umot - U(R3)}{R4} + \frac{Ugs}{R5} \qquad (38)$$

$$\frac{Uc - U_{EB}(Q4)}{R3} = \frac{Umot - Uc + U_{EB}(Q4)}{R4} + \frac{Ugs}{R5} \qquad (39)$$

Auflösen nach der Last-Spannung Umot ergibt:

$$Umot = Uc \cdot \left(\frac{R4}{R3} + 1\right) - U_{EB}(Q4) \cdot \left(\frac{R4}{R3} + 1\right) - Ugs \cdot \frac{R4}{R5} \qquad (40)$$

Geht man im Folgenden davon aus, dass der Widerstand Rf des Tiefpassfilters deutlich größer als die Summe aus dem Basis-Emitter-Widerstand RBE, dem Kollektor-Basis-Widerstand RCB sowie dem zweiten Widerstand R2 ist (Rf >> R2 + RBE + RCB), so gilt für die Spannung **Uy,** die über diese drei Widerstände abfällt:

$$Uy = U(R2) + U_{CE}(Q3) \qquad (41)$$

$$Uy = R2 \cdot \frac{Uz - U_{CE}(Q3)}{R6 + R2} + U_{CE}(Q3) \qquad (42)$$

$$Uy = \frac{R2}{R6 + R2} \cdot Uz - \left(\frac{R2}{R6 + R2} - 1\right) \cdot U_{CE}(Q3) \qquad (43)$$

$$Uy = \frac{R2}{R6 + R2} \cdot Uz + \left(1 - \frac{R2}{R6 + R2}\right) \cdot U_{EB}(Q3) \cdot \left(\frac{RCB}{RBE} + 1\right) \quad (44)$$

Aus der Bedingung Rf >> R2 + RBE + RCB folgt weiterhin, dass Uc ≈ TV*Uy ist. Hieraus ergibt sich für die Last-Spannung Umot unter Berücksichtigung von Gleichung (44):

$$Umot = \left\{ TV \cdot \left[ \frac{R2}{R6 + R2} \cdot Uz + \left(1 - \frac{R2}{R6 + R2}\right) \cdot U_{EB}(Q3) \cdot \left(\frac{RCB}{RBE} + 1\right) \right] - U_{EB}(Q4) \right\} \cdot \left(\frac{R4}{R3} + 1\right)$$
$$- Ugs \cdot \frac{R4}{R5} \qquad (45)$$

Diese Gleichung für die Last-Spannung Umot wird unabhängig von der Emitter-Basis-Spannung $U_{EB}(Q4)$ des Transistors Q4, wenn folgende Beziehung erfüllt ist:

$$TV \cdot \left(1 - \frac{R2}{R6 + R2}\right) \cdot \left(\frac{RCB}{RBE} + 1\right) = 1 \qquad (46)$$

Werden die Widerstände RCB, RBE, R2, R6 des PWM/DC-Umwandlers 4d entsprechend obiger Beziehung gewählt, so wird der Einfluss der Emitter-Basis-Spannung $U_{EB}$ des Transistors Q4 auf die Last-Spannung Umot kompensiert, sofern ein Doppeltransistor verwendet wird, d.h. sofern $U_{EB}(Q3) = U_{EB}(Q4)$ gilt. Die Regeleinrichtung 3d kann in diesem Fall so dimensioniert werden, dass sich im Bereich um ein bestimmtes Tastverhältnis TV, z.B. um TV=0,5, eine tolerable Streuung der Last-Spannung Umot in Abhängigkeit von einer Streuung der Emitter-Basis-Spannungen $U_{EB}$ (Q3), $U_{EB}$ (Q4) der beiden Transistoren Q3, Q4 ergibt.

Bei allen der in Fign. 2 bis 5 gezeigten Regeleinrichtungen 1a, 2, 3a-d ist es möglich, zusätzlich unterlagerte Schaltungsteile vorzusehen, die im Kollektorkreis des Transistors Q4 angeordnet sind und von dessen Kollektorstrom gespeist werden, so dass auch für den unterlagerten Schaltungsteil eine Ruhestromabschaltung ermöglicht wird. Besonders vorteilhaft an den oben beschriebenen Regeleinrichtungen ist es ferner, dass diese mit vergleichsweise wenigen diskreten Bauteilen aufgebaut werden können und somit besonders kostengünstig realisierbar sind und über einen weiten Temperaturbereich bis +150°C funktionsfähig bleiben.

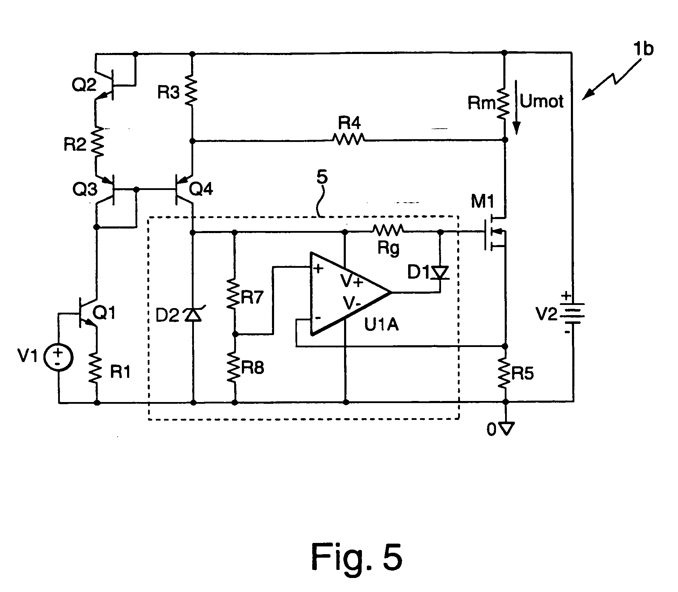

**Fig. 5** zeigt eine Regeleinrichtung **1b,** welche der Regeleinrichtung 1a von Fig. 1 entspricht und um einen Strombegrenzer als unterlagerten Schaltungsteil **5** ergänzt ist, der einen Kurzschluss- bzw. Überstromschutz ermöglicht. Der unterlagerte Schaltungsteil 5 ist hierbei parallel zur Gate-Source-Steuerstrecke des als MOS-FET ausgebildeten Stelltransistors M1 angeordnet.

Die Funktionsweise des Strombegrenzers ist wie folgt: Ein Operationsverstärker **U1A** vergleicht den Spannungsabfall über einem achten Widerstand **R8** mit dem Spannungsabfall über dem fünften Widerstand R5 (Shunt-Widerstand). Im Kurzschlussfall steigt der Spannungsabfall am fünften Widerstand R5 über den Spannungsabfall am achten Widerstand R8, der Operationsverstärker U1A reduziert seine Ausgangsspannung und begrenzt über eine Diode **D1** die Gatespannung des Stelltransistors M1. Die Anordnung ist weiterhin kurzschlussfest, da eine Zener-Diode **D2** als Referenzwert für den Kurzschlussstrom dient und gleichzeitig die Gatespannung am Stelltranspor M1 begrenzt. Der Spannungsteiler zwischen einem siebten Widerstand **R7** und dem achten Widerstand R8 reduziert hierbei den Spannungsabfall über der Zener-Diode D2 auf einen geeigneten Wert.

Die oben beschriebenen Regeleinrichtungen 1a, 1b, 2, 3a bis 3d kommen mit einer sehr geringen Zahl von Bauelementen aus und können diskret auch ohne integrierte Bauelemente realisiert werden. Diskrete Schaltungen arbeiten bis zu 150°C Umgebungstemperatur, kostengünstige integrierte Schaltungen nur bis zu 125°C. Mit dem erfinderischen Schaltungskonzept kann daher beispielsweise kostengünstig eine Regeleinrichtung aufgebaut werden, die über das Kühlwasser des Verbrennungsmotors im Kraftfahrzeug entwärmt wird. Die Regeleinrichtungen eignen sich daher besonders für Kraftfahrzeuggebläse, bei denen die Last durch einen Gebläsemotor gebildet ist.

Weiterhin weisen die oben dargestellten Regeleinrichtungen eine Ruhestromaufnahme auf, die deutlich unter der Ruhestromaufnahme der aus dem Stand der Technik bekannten Regeleinrichtungen liegt. Auch können die Widerstände bei den oben beschriebenen Lösungen niederohmiger dimensioniert und die Schaltungen somit für Kriechströme unanfälliger gemacht werden. So können beispielsweise der dritte bzw. vierte Widerstand R3, R4 jeweils weniger als 10 kΩ, bevorzugt weniger als 2 kΩ betragen. Auch wird bei den obigen Lösungen ein Regelkreis mit vergleichsweise geringer Schleifenverstärkung verwendet, was sich positiv auf das EMV-Verhalten und den Aufwand für Entstörmaßnahmen auswirkt. Das Verhalten der Regelungseigenschaften der beschriebenen Regeleinrichtungen bei Schwankungen der Bord- bzw. Versorgungsspannung V2 ist ferner auch weitgehend unabhängig von Bauteiltoleranzen.

## Patentansprüche

1. Elektronische Regeleinrichtung (1a, 1b, 2a, 2b, 3a bis 3d) zur Regelung einer Spannung (Umot) an einer Last (Rm), insbesondere an einem Gebläsemotor eines Kraftfahrzeugs, in Abhängigkeit von einem Steuersignal (V1, Ie, S1), umfassend:

   einen Stelltransistor (M1),
   einen Transistor (Q4), der den Steuerkanal des Stelltransistors (M1) ansteuert,
   einen weiteren Transistor (Q3), dessen Basis-Emitter-Spannung den Einfluss der Emitter-Basis-Spannung des Transistors (Q4) auf die Spannung (Umot) an der Last (Rm) kompensiert, sowie zwei Widerstände (R3, R4), die einen Spannungsteiler bilden, über den die Spannung (Umot) an der Last (Rm) dem Emitter des Transistors (Q4) zugeführt wird,

   wobei die Regeleinrichtung (1a, 1b, 2a, 2b, 3a bis 3d) ausgelegt ist, bei ausbleibendem Steuersignal (V1, Ie, S1) die Steuerkanäle aller Transistoren (Q1 bis Q4, M1) der Regeleinrichtung (1a, 1b, 2a, 2b, 3a bis 3d) zu sperren, um den Stromfluss durch alle Widerstände (R1 bis R8, Rf, RCB, RBE) der Regeleinrichtung (1a, 1b, 2a, 2b, 3a bis 3d) zu begrenzen, so dass die Regeleinrichtung (1a, 1b, 2a, 2b, 3a bis 3d) bei ausbleibendem Steuersignal (V1, Ie, S1) eine Ruhestromaufnahme im Sperrstrombereich der Transistoren (Q1 bis Q4, M1) aufweist.

2. Regeleinrichtung nach Anspruch 1, bei der die beiden Widerstände (R3, R4) jeweils nicht mehr als 10 kΩ, bevorzugt nicht mehr als 2 kΩ betragen.

3. Regeleinrichtung nach Anspruch 1 oder 2, welche ausgelegt ist, eine zu dem Steuersignal (V1, Ie, S1) proportionale Spannung. (Umot) an der Last (Rm) zu erzeugen, wobei der Proportionalitätsfaktor vom Verhältnis der beiden Widerstände (R3, R4) abhängt.

4. Regeleinrichtung nach einem der vorhergehenden Ansprüche, bei welcher der weitere Transistor (Q3) zusammen mit dem Transistor (Q4) einen basisgekoppelten Differenzverstärker bildet, wobei die Transistoren (Q3, Q4) des Differenzverstärkers bevorzugt einen Doppeltransistor bilden.

5. Regeleinrichtung nach Anspruch 4, bei der das Steuersignal (V1, Ie, S1) eine Steuerspannung (V1) ist und bei der zwei zusätzliche Transistoren (Q1, Q2) vorgesehen sind, wobei dem Steuerkanal des ersten zusätzlichen Transistors (Q1) die Steuerspannung (V1) zugeführt wird, und wobei der zweite zusätzliche Transistor (Q2) gemeinsam mit dem weiteren Transistor (Q3) des Differenzverstärkers im Kollektorkreis des ersten zusätzlichen Transistors (Q1) angeordnet ist.

6. Regeleinrichtung nach Anspruch 5, bei welcher im Emitterkreis des ersten zusätzlichen Transistors (Q1) ein erster Widerstand (R1) sowie im Kollektorkreis des ersten zusätzlichen Transistors (Q1) ein zweiter Widerstand (R2) in Serie zum zweiten zusätzlichen Transistor (Q2) angeordnet sind, wobei der erste und zweite Widerstand (R1, R2) bevorzugt gleich groß sind.

7. Regeleinrichtung nach Anspruch 4, bei welcher das Steuersignal (V1, Ie, S1) ein Steuerstrom (Ie) ist, und bei welcher zwei zusätzliche Transistoren (Q1, Q2) vorgesehen sind, welche einen Stromspiegel zur Übertragung des Steuerstroms (Ie) auf den weiteren Transistor (Q3) bilden.

8. Regeleinrichtung nach einem der Ansprüche 5 bis 7, bei der die beiden zusätzlichen Transistoren (Q1, Q2) einen Doppeltransistor bilden.

9. Regeleinrichtung nach einem der Ansprüche 1 bis 3, bei der das Steuersignal (V1, Ie, S1) ein pulsweitenmoduliertes Signal (S1) ist und die Regeleinrichtung (3a bis 3d) einen PWM/DC-Umwandler (4a bis 4d) zur Umwandlung des pulsweitenmodulierten Signals (S1) in eine Gleichspannung (Uc) aufweist.

10. Regeleinrichtung nach Anspruch 9, bei welcher der PWM/DC-Umwandler (4a bis 4d) den weiteren Transistor (Q3) aufweist, der bevorzugt mit dem Transistor (Q4) einen Doppeltransistor bildet, wobei die Emitter-Basis-Spannung des weiteren Transistors (Q3) den Einfluss der Emitter-Basis-Spannung des Transistors (Q4) auf die Spannung (Umot) an der Last (Rm) bei genau einem Tastverhältnis (TV) gerade kompensiert.

11. Regeleinrichtung nach Anspruch 10, bei welcher parallel zur Basis-Emitter-Strecke des weiteren Transistors (Q3) ein Basis-Emitter-Widerstand (RBE) sowie parallel zur Kollektor-Basis-Strecke des weiteren Transistors (Q3) ein Kollektor-Basis-Widerstand (RCB) angeordnet sind, wobei das genau eine Tastverhältnis (TV) über das Verhältnis der beiden Widerstände (RBE, RCB) einstellbar ist.

12. Regeleinrichtung nach einem der vorhergehenden Ansprüche, weiter umfassend einen unterlagerten Schaltungsteil (5), insbesondere einen Strombegrenzer, der im Kollektorkreis des Transistors (Q4) angeordnet ist und der von dessen Kollektorstrom gespeist wird, wobei der unterlagerte Schaltungsteil (5) bevorzugt parallel zur Gate-Source-Steuerstrecke des als MOS-FET ausgebildeten Stelltransistors (M1) angeordnet ist.

13. Regeleinrichtung nach einem der vorhergehenden Ansprüche, welche aus diskreten Bauteilen aufgebaut ist.

14. Kraftfahrzeuggebläse mit einer Regeleinrichtung (1a, 1b, 2a, 2b, 3a bis 3d) nach einem der vorhergehenden Ansprüche, bei dem die Last (Rmot) durch einen Gebläsemotor gebildet ist.

**Claims**

1. Electronic control system (1a, 1b, 2a, 2b, 3a to 3d) for controlling a voltage (Umot) across a load (Rm), in particular across a fan motor of a motor vehicle, as a function of a control signal (V1, Ie, S1), comprising:

   a setting transistor (M1),
   a transistor (Q4), which activates the control channel of the setting transistor (M1),
   one further transistor (Q3), the base emitter voltage of which compensates for the influence of the emitter-base voltage of the transistor (Q4) on the voltage (Umot) across the load (Rm),
   as well as
   two resistors (R3, R4), which form a voltage divider via which the voltage (Umot) across the load (Rm) is fed to the emitter of the transistor (Q4),

   wherein the control system (1a, 1b, 2a, 2b, 3a to 3d) is designed, in the absence of the control signal (V1, Ie, S1), to block the control channels of all the transistors (Q1 to Q4, M1) of the control system (1a, 1b, 2a, 2b, 3a to 3d) for limiting the current through all the resistors (R1 to R8, Rf, RCB, RBE) of the control system (1a, 1b, 2a, 2b, 3a to 3d), such that, in the absence of the control signal (V1, Ie, S1), the control system (1a, 1b, 2a, 2b, 3a to 3d) has a quiescent current consumption in the off-state current range of the transistors (Q1 to Q4, M1).

2. Control system according to claim 1, in which the two resistors (R3, R4) each amount to not more than 10 kΩ, preferably not more than 2 kΩ.

3. Control system according to claim 1 or 2, which is designed to generate a voltage (Umot) across the load (Rm) proportional to the control signal (V1, Ie, S1), the proportionality factor being dependent on the ratio of the two resistors (R3, R4).

4. Control system according to any one of the preceding claims, in which the further transistor (Q3), together with the transistor (Q4), forms a base-coupled differential amplifier, the transistors (Q3, Q4) of the differential amplifier preferably forming a double transistor.

5. Control system according to claim 4, in which the control signal (V1, Ie, S1) is a control voltage (V1) and in which two additional transistors (Q1, Q2) are provided, the control voltage (V1) being fed to the control channel of the first additional transistor (Q1), and the second additional transistor (Q2), together with the further transistor (Q3) of the differential amplifier, being arranged in the collector circuit of the first additional transistor (Q1).

6. Control system according to claim 5, in which a first resistor (R1) in the emitter circuit of the first additional transistor (Q1) and a second resistor (R2) in the collector circuit of the first additional transistor (Q1) are arranged in series with the second additional transistor (Q2), the first and second resistors (R1, R2) preferably being of the same size.

7. Control system according to claim 4, in which the control signal (V1, Ie, S1) is a control current (Ie), and in which two additional transistors (Q1, Q2) are provided, which form a current mirror for transfer of the control current (Ie) to the further transistor (Q3).

8. Control system according to any one of claims 5 to 7, in which the two additional transistors (Q1, Q2) form a double transistor.

9. Control system according to any one of claims 1 to 3, wherein the control signal (V1, Ie, S1) is a pulse width-modulated signal (S1) and the control system (3a to 3d) comprises a PWM/DC converter (4a to 4d) for converting the pulse width-modulated signal (S1) into a direct voltage (Uc).

10. Control system according to claim 9, in which the PWM/DC converter (4a to 4d) comprises the further transistor (Q3), which preferably forms a double transistor with the transistor (Q4), the emitter-base voltage of the further transistor (Q3) exactly compensating for the influence of the emitter-base voltage of the transistor (Q4) on the voltage (Umot) across the load (Rm) at exactly one pulse duty cycle (TV).

11. Control system according to claim 10, in which a base-emitter resistor (RBE) is arranged parallel to the base-emitter path of the further transistor (Q3) and a collector-base resistor (RCB) is arranged parallel to the collector-base path of the further transistor (Q3), the exactly one pulse duty cycle (TV) being adjustable by way of the ratio of the two resistors (RBE, RCB).

12. Control system according to any one of the preceding claims, further comprising a subordinate circuit part (5), in particular a current limiter, which is arranged in the collector circuit of the transistor (Q4) and which is fed by the collector current thereof, in which the subordinate circuit part (5) is preferably arranged parallel to the gate-source control path of the setting transistor (M1) in the form of a MOS-FET.

13. Control system according to any one of the preceding claims, which is constructed from discrete components.

14. Motor vehicle fan having a control system (1a, 1b, 2a, 2b, 3a to 3d) according to any one of the preceding claims, in which a fan motor constitutes the load (Rmot).

**Revendications**

1. Dispositif de régulation électronique (1a, 1b, 2a, 2b, 3a à 3d) pour réguler une tension (Umot) à une charge (Rm), en particulier à un moteur de ventilateur d'un véhicule automobile, en fonction d'un signal de commande (V1, Ie, S1), comprenant :

   un transistor de réglage (M1),
   un transistor (Q4) qui commande le canal de commande du transistor de réglage (M1),
   un autre transistor (Q3) dont la tension base-émetteur compense l'influence de la tension base-émetteur du transistor (Q4) sur la tension (Umot) à la charge (Rm),
   ainsi que
   deux résistances (R3, R4) qui forment un diviseur de tension par lequel la tension (Umot) à la charge (Rm) est amenée à l'émetteur du transistor (Q4),
   le dispositif de régulation (1a, 1b, 2a, 2b, 3a à 3d) étant conçu, en l'absence de signal de commande (V1, Ie, S1), pour bloquer les canaux de commande de tous les transistors (Q1 à Q4, M1) du dispositif de régulation (1a, 1b, 2a, 2b, 3a à 3d) pour limiter le flux de courant à travers toutes les résistances (R1 à R8, Rf, RCB, RBE) du dispositif de régulation (1a, 1b, 2a, 2b, 3a à 3d), de façon que le dispositif de régulation (1a, 1b, 2a, 2b, 3a à 3d) présente, en l'absence de signal de commande (V1, Ie, S1), une consommation de courant au repos dans la plage du courant inverse des transistors (Q1 à Q4, M1).

**2.** Dispositif de régulation selon la revendication 1, dans lequel les deux résistances (R3, R4) n'ont chacune pas une valeur supérieure à 10 kΩ, de préférence pas supérieure à 2 kΩ.

**3.** Dispositif de régulation selon la revendication 1 ou 2, lequel est conçu pour générer une tension (Umot) proportionnelle au signal de commande (V1, Ie, S1) à la charge (Rm), le facteur de proportionnalité dépendant du rapport des deux résistances (R3, R4).

**4.** Dispositif de régulation selon une des revendications précédentes, dans lequel l'autre transistor (Q3) forme avec le transistor (Q4) un amplificateur différentiel couplé par la base, les transistors (Q3, Q4) de l'amplificateur différentiel formant de préférence un transistor double.

**5.** Dispositif de régulation selon la revendication 4, dans lequel le signal de commande (V1, Ie, S1) est une tension de commande (V1) et dans lequel deux transistors supplémentaires (Q1, Q2) sont prévus, la tension de commande (V1) étant amenée au canal de commande du premier transistor supplémentaire (Q1), et le deuxième transistor supplémentaire (Q2) étant disposé en commun avec l'autre transistor (Q3) de l'amplificateur différentiel dans le circuit de collecteur du premier transistor supplémentaire (Q1).

**6.** Dispositif de régulation selon la revendication 5, dans lequel une première résistance (R1) est disposée dans le circuit d'émetteur du premier transistor supplémentaire (Q1) et une deuxième résistance (R2) est disposée en série avec le deuxième transistor supplémentaire (Q2) dans le circuit de collecteur du premier transistor supplémentaire (Q1), la première et la deuxième résistance (R1, R2) étant de préférence de même valeur.

**7.** Dispositif de régulation selon 1a revendication 4, dans lequel le signal de commande (V1, Ie, S1) est un courant de commande (Ie), et dans lequel sont prévus deux transistors supplémentaires (Q1, Q2) qui forment un miroir de courant pour transmettre le courant de commande (Ie) à l'autre transistor (Q3).

**8.** Dispositif de régulation selon une des revendications 5 à 7, dans lequel les deux transistors supplémentaires (Q1, Q2) forment un transistor double.

**9.** Dispositif de régulation selon une des revendications 1 à 3, dans lequel le signal de commande (V1, Ie, S1) est un signal modulé en largeur d'impulsion (S1) et le dispositif de régulation (3a à 3d) présente un convertisseur PMM/DC (4a à 4d) pour convertir le signal modulé en largeur d'impulsion (S1) en une tension continue (Uc).

**10.** Dispositif de régulation selon la revendication 9, dans lequel le convertisseur PWM/DC (4a à 4d) présente l'autre transistor (Q3), qui forme de préférence un transistor double avec le transistor (Q4), la tension émetteur-base de l'autre transistors (Q3) compensant tout juste l'influence de la tension émetteur-base du transistor (Q4) sur la tension (Umot) à la charge (Rm) à exactement un rapport cyclique (TV).

**11.** Dispositif de régulation selon la revendication 10, dans lequel une résistance base-émetteur (RBE) est disposée en parallèle avec la jonction base-émetteur de l'autre transistor (Q3) et une résistance collecteur-base (RCB) est disposée en parallèle avec la jonction collecteur-base de l'autre transistors (Q3), ledit exactement un rapport cyclique (TV) étant réglable par le rapport des deux résistances (RBE, RCB).

**12.** Dispositif de régulation selon une des revendications précédentes, comprenant en outre une partie de circuit subordonnée (5), en particulier un limiteur de courant qui est disposé dans le circuit de collecteur du transistor (Q4) et qui est alimenté par son courant de collecteur, la partie de circuit subordonnée (5) étant de préférence disposée en parallèle avec la jonction de commande grille-source du transistor de réglage (M1) réalisé sous forme de MOS-FET.

**13.** Dispositif de régulation selon une des revendications précédentes, lequel est constitué de composants discrets.

**14.** Ventilateur de véhicule automobile avec un dispositif de régulation (1a, 1b, 2a, 2b, 3a à 3d) selon une des revendications précédentes, dans lequel la charge (Rmot) est formée par un moteur de ventilateur.

Fig. 1

Fig. 2

Fig. 3a

Fig. 3b

Fig. 4a

Fig. 4b

Fig. 4c

Fig. 4d

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4926354 A
- DE 102004042731 A1